# EUROPÄISCHE PATENTSCHRIFT

(11) **EP 2 862 724 B1**
(45) Veröffentlichungstag und Bekanntmachung des Hinweises auf die Patenterteilung: **21.02.2018**
(21) Anmeldenummer: 13188777.0
(22) Anmeldetag: 15.10.2013
(51) Int. Cl.: B44B 5/02, B32B 37/10, B29C 59/02, B44C 1/24, B44C 5/04

(54) **Verfahren zum Beschichten und Prägen eines Substrats**
Method for coating and embossing a substrate
Procédé destiné au revêtement et à l'estampage d'un substrat

(43) Veröffentlichungstag der Anmeldung: 22.04.2015
(73) Patentinhaber: SWISS KRONO Tec AG, 6004 Luzern (CH)
(72) Erfinder: Zitzmann, Klaus, 47800 Krefeld (DE); Hofer, Josef, 6048 Horw (CH)
(74) Vertreter: Kalkoff & Partner

(56) Entgegenhaltungen:
- EP-A1- 0 020 001
- EP-A1- 2 295 240
- US-A- 5 647 934
- US-A1- 2011 244 194
- "Siempelkamp-Kurztaktpressen: Standard, HIgh-End, Eco: Drei KOnzepte machen Druck", , 1. Januar 2013 (2013-01-01), XP055106013, Gefunden im Internet: URL:http://www.siempelkamp.com/fileadmin/m edia/Deutsch/MaschinenundAnlagen/Produkte/ holzplattenanlagen/Bulletin_II_12_de_S.58_ 63_Kurztaktpressen.pdf [gefunden am 2014-03-06]

## Beschreibung

Die Erfindung betrifft ein Verfahren zum Beschichten und Prägen eines Substrats.

Als Substrat können Holzwerkstoffplatten oder Trägerpapiere eingesetzt werden. Auf oder auch unter dem Substrat werden Schichten aus Kunstharz, z. B. kunstharzgetränkte Papiere oder Kunstharzfolien angeordnet, die mit dem Substrat unter Einwirkung von Druck und erhöhter Temperatur zu einem Laminat verbunden werden sollen, so dass ein beschichtetes Substrat entsteht. Zusätzlich kann die Oberfläche geprägt werden.

Die US 5,647,934 A lehrt das Pressen mehrlagiger Holzwerkstoffe mit gleichzeitigem Prägen der unbeschichteten Oberfläche, wobei eine Pressdruckvariation gemäß Anspruch 1 vorgenommen wird. Das Beschichten und Prägen von Holzwerkstoffplatten erfolgt in Pressen, bei denen beheizte Pressbleche unter einem Druck von 600 N/cm² und mehr auf Pressgutstapel einwirken. Die Pressgutstapel weisen eine Holzwerkstoffplatte und eine Lage aus Kunstharz auf. Werden Pressbleche mit einem Strukturprofil eingesetzt, wird die Holzwerkstoffplatte in einem Arbeitsgang beschichtet und geprägt. Funktionsweise und technische Daten zu bekannten Pressen zum Beschichten und Prägen von Holzwerkstoffplatten sind in der Veröffentlichung DE 100 43 029 A1 von Dieffenbacher, aber auch in der Veröffentlichung "Siempelkamp-Kurztaktpressen: Standard, High-End, Eco Drei Konzepte machen Druck", © 2013, Siempelkamp, beschrieben; für die vorliegende Anmeldung ist insbesondere die Beschreibung der 2011 entwickelten High-End-Presse KT 700 von Interesse. Für Trägerpapiere gelten vergleichbare Bedingungen für das Laminieren.

Trotz der hochentwickelten Technik ist an bekannten Pressen nachteilig, dass die Qualität der herzustellenden transparenten und mit tiefen Prägungen versehenen Oberflächen bisher nur unter aufwändigem Einsatz von hohem Druck gewährleistet werden kann.

Es ist daher Aufgabe der Erfindung, ein energiesparendes Verfahren zum Beschichten und Prägen der Oberflächen von Holzwerkstoffplatten und Trägerpapier vorzuschlagen.

Diese Aufgabe wird gelöst mit dem Verfahren nach Anspruch 1.

Das erfindungsgemäße Verfahren zum Beschichten und Prägen eines Substrats weist folgende Schritte auf:
- Einbringen eines Pressgutstapels, aufweisend ein Trägersubstrat und mindestens eine Lage Kunstharz in eine Plattenpresse mit einem oberen und einem unteren Pressblech, die jeweils beheizt sind, wobei mindestens ein Pressblech mit einem Strukturprofil versehen ist,
- Schließen der Presse und Aufbauen des Drucks in einer Druckaufbauphase bis zu einem maximalen Pressdruck,
- Pressen des Pressgutstapels in einer Hochdruckphase bei maximalem Druck,
- Abbauen des Drucks in einer Druckabbauphase und Öffnen der Presse sowie
- Entfernen des Pressgutstapels aus der Plattenpresse,
dadurch gekennzeichnet, dass
während eines ersten Abschnitts der Hochdruckphase der maximale Pressdruck aufgebracht wird, und dass mindestens während eines zweiten Abschnitts der Hochdruckphase ein reduzierter Pressdruck aufgebracht wird.

Während der Begriff des maximalen Pressdrucks den höchsten während des Pressens verwendeten Druck bezeichnet, wird der Begriff des reduzierten Pressdrucks verwendet, um einen Druck bzw. ein Druckniveau zu bezeichnen, mit dem zwar initial keine tiefe Prägung erreicht werden kann, das aber ausreichend ist, um das Verbinden der verschiedenen Lagen eines Pressgutstapels mit maximaler Haftung aneinander, guter Transparenz und ebener Oberfläche zu gewährleisten. Dieser reduzierte Druck liegt in dem Druckbereich, der z. B. zum Beschichten von Holzwerkstoffplatten ohne Prägung einzustellen ist. Die exakten, im Einzelfall zu verwendenden Drücke hängen wesentlich von den verwendeten Rohstoffen ab und sind vom Fachmann in wenigen Orientierungsversuchen einfach zu ermitteln. Insbesondere der reduzierte Druck während der Hochdruckphase wird so niedrig wie möglich gewählt, um eine maximale Entlastung der Presse zu gewährleisten.

Es ist die Erkenntnis der Erfinder, dass der maximale Pressdruck nicht über die gesamte Hochdruckphase Verwendung finden muss, sondern dass die Presse dadurch entlastet werden kann, und der Pressgut-Stapel insgesamt mit geringerem Druck zu einem Laminat gepresst werden kann, dadurch, dass nach Einbringen und ggf. Fixieren der tiefen Prägung unter maximalem Druck ein reduzierter Pressdruck genügt, um eine qualitativ hochwertige Oberfläche mit tiefer Prägung zu erreichen.

Beschichtet und geprägt wird ein Pressgutstapel, der aus einem Trägersubstrat in Form eines Trägerpapiers oder einer Holzwerkstoffplatte, typischerweise einer Faserplatte, aber auch einer Spanplatte, einer Sperrholzplatte oder einer Massivholzplatte und mindestens einer Lage Kunstharz zusammengesetzt ist. Als Trägerpapiere, die auch als Kernlagen bezeichnet werden, werden meist Papiere mit hoher Festigkeit verwendet, z. B. Kraftpapier. Das Blattgewicht der Trägerpapiere kann bis zu 300 g/m² betragen; solche Papiere werden dann auch als Pappe oder Karton bezeichnet. Die optischen Eigenschaften des Trägerpapiers sind nicht von besonderer Bedeutung. Das Trägerpapier kann mit Kunstharz imprägniert sein, das ist aber nicht erforderlich. Ein Laminat, das ein Trägerpapier als Substrat aufweist, wird als High Pressure Laminat (HPL) bezeichnet. Für beide Substrate, Holzwerkstoffplatte und Trägerpapier, gelten dieselben verfahrenstechnischen Angaben. Soweit also im Rahmen dieser Anmeldung Merkmale der Erfindung am Beispiel von Holzwerkstoffplatten erläutert werden, gelten diese Ausführungen in gleicher Weise auch für den Einsatz von Trägerpapier als Substrat.

Die Lage Kunstharz ist erfindungsgemäß als kunstharzgetränktes Papier, als Kunstharz-Folie oder als flüssig aufgetragene Schicht von Kunstharz ausgeführt. Es werden in einem Arbeitsgang häufig mehrere Lagen Kunstharz auf die Holzwerkstoffplatte aufgebracht, wobei die Lagen aus Kunstharz oberhalb und/oder unterhalb der Holzwerkstoffplatte angeordnet sein können. Das Kunstharz ist vor dem Beschichten fest oder flüssig; es ist noch nicht ausgehärtet. In der Presse härtet das Kunstharz unter Einwirkung von Druck und Temperatur in Folge von Vernetzungsreaktionen aus und bildet eine fest auf der Holzwerkstoffplatte verankerte Beschichtung. Häufig wird zwischen Kunstharzimprägnierten Papieren, die ein Dekor tragen (Dekorpapiere) und solchen, die kein Dekor tragen (Overlay) unterschieden.

Der Pressgutstapel wird zwischen zwei beheizte Pressbleche, ein oberes Pressblech und ein unteres Pressblech, eingebracht. Die Temperatur der Pressbleche beträgt in der Regel zwischen 140 °C und 200 °C, häufig zwischen 160 °C und 180 °C. Mindestens eines der Pressbleche ist mit einem Strukturprofil versehen. Sollen beide Seiten einer Platte oder eines Trägerpapiers mit einer dreidimensionalen Oberflächenstruktur versehen werden, können auch beide Pressbleche mit einem Strukturprofil versehen werden.

Das Strukturprofil verleiht dem Pressblech eine dreidimensionale Form, wobei, senkrecht zur Ebene des Pressblechs gemessen, die tiefsten Stellen des Strukturprofils bezogen auf die ursprüngliche Oberfläche des Pressblechs eine Tiefe von beispielsweise bis zu 400 µm aufweisen. Das Strukturprofil kann z. B. aus Stegen und Vertiefungen aber auch aus erhabenen und zurückliegenden Flächen gebildet sein. Das Strukturprofil kann natürliche Oberflächen wie z. B. Holz- oder Steinoberflächen nachbilden, es kann aber auch dreidimensionale Phantasiedekore zeigen. Die Struktur des Pressblechs wird beim Prägen in die Oberfläche der Beschichtung sowie ggf. des Substrats übertragen, so dass die fertig beschichtete und geprägte Holzwerkstoffplatte oder das High Pressure Laminate eine dreidimensionale Struktur aufweist.

Nach Einbringen des Pressgutstapels wird die Presse geschlossen und der Druck wird in einer Druckaufbauphase bis zu einem maximalen Pressdruck erhöht. Bekannte Pressen, die zum Beschichten und Prägen von Holzwerkstoffplatten oder zum Laminieren von Trägerpapier eingesetzt werden, können bei einem maximalen Pressdruck von mindestens 600 N/cm² betrieben werden; es sind aber auch Plattenpressen bekannt, die bei 700 N/cm² oder 1.000 N/cm² betrieben werden können. Während Plattenpressen, die lediglich zum Beschichten geeignet sind, mit z. B. 300 N/cm² betrieben werden, erfordert das Prägen von zu laminierenden Substraten, insbesondere das Prägen von tiefen Oberflächenreliefs, initial, also gerade in der Anfangsphase des Pressens, hohen Druck, um die Prägung in das Kunstharz einzubringen.

Nach einer bevorzugten Ausführung des erfindungsgemäßen Verfahrens kommen folgende Drücke und Zeitdauern jeweils für die Hochdruckphase bei maximalem Druck und bei reduziertem Druck zur Anwendung: Der maximale Pressdruck für Holzwerkstoffplatten mit einer Dichte von mehr als 500 kg/m³ sowie für Trägerpapiere beträgt mindestens 600 N/cm², während der maximale Pressdruck für Holzwerkstoffplatten mit einer Dichte von maximal 500 kg/m³ bis zu 350 N/cm² beträgt. Während eines ersten Abschnitts H1 der Hochdruckphase H wird der maximale Pressdruck aufgebracht, der, bezogen auf die Dauer der gesamten Hochdruckphase vorteilhaft bis zu 50% dauert. Anschließend wird während eines zweiten Abschnitts H2 der Hochdruckphase H ein reduzierter Pressdruck von maximal 350 N/cm² für Holzwerkstoffplatten mit einer Dichte von mehr als 500 kg/m³ und ein reduzierter Pressdruck von maximal 200 N/cm² für Holzwerkstoffplatten mit einer Dichte von maximal 500 kg/m³ aufgebracht.

Das Pressen des Pressgutstapels -und damit das Beschichten bzw. Laminieren und Pressen des Pressgutstapels zu einer beschichteten und mit einer Oberflächenprägung versehenen Holzwerkstoffplatte oder einem HPL - erfolgt nach Erreichen des maximalen Pressdrucks in einer Hochdruckphase bei maximalem Druck. Die Hochdruckphase endet mit dem Aushärten des Kunstharzes, das in ausgehärtetem Zustand fest und vollflächig mit der Oberfläche der Holzwerkstoffplatte oder dem Trägerpapier verbunden ist. Die Lage des nun ausgehärteten Kunstharzes ist zudem mit einer Prägung versehen. Nach dem Aushärten des Kunstharzes wird die Hochdruckphase beendet durch das Abbauen des Drucks in einer Druckabbauphase und Öffnen der Presse sowie durch das Entfernen des Pressgutstapels aus der Plattenpresse.

Holzwerkstoffplatten sind in sehr unterschiedlicher Ausführung verfügbar, insbesondere auch innerhalb eines weiten Spektrums an Dichte. So sind beispielsweise Faserplatten als hoch- oder mitteldichte Faserplatten (HDF, MDF) mit einer Dichte von mehr al 500 kg/m³ verfügbar, während leichte Faserplatten eine Dichte von maximal 500 kg/m³ aufweisen. Das erfindungsgemäße Verfahren betrifft deshalb zwei Alternativen, jeweils ein Verfahren zum Beschichten und Prägen von Platten mit einer Dichte von mehr als 500 kg/m³ und ein Verfahren zum Beschichten und Prägen von Platten mit einer Dichte von maximal 500 kg/m³. Leichte Holzwerkstoffplatten mit einer Dichte von maximal 500 kg/m³ werden bis her allenfalls beschichtet, nicht aber geprägt. Der erhöhte maximale Druck, der während der Hochdruckphase zum Prägen auf die leichte Holzwerkstoffplatte ausgeübt werden muss, komprimiert die leichte Platte dauerhaft, so dass kein brauchbares Ergebnis zu erreichen ist.

Erfindungsgemäß wird vorgeschlagen, die Hochdruckphase H in zwei Abschnitte H1 und H2 zu unterteilen. Der maximale Pressdruck wird erfindungsgemäß nicht über die gesamte Hochdruckphase beibehalten. Vielmehr wird während eines ersten Abschnitts H1, der nach einer ersten Alternative der Erfindung bevorzugt maximal 50 % der Dauer der gesamten Hochdruckphase beträgt, der maximale Pressdruck aufgebracht. Anschließend wird in einem zweiten Abschnitt H2 der Druck vom maximalen Pressdruck auf einen reduzierten Pressdruck abgesenkt. Der reduzierte Pressdruck entspricht im Wesentlichen dem Druck, der erforderlich ist, um das Substrat ohne Einbringen einer Prägung zu beschichten bzw. um das Kunstharz auf der Holzwerkstoffplatte auszuhärten. Üblicherweise ist dies für Platten mit einer Dichte von mehr als 500 kg/m³ ein Druck von maximal 350 N/cm².

Es ist die Erkenntnis des Erfinders, dass der maximale Druck von mindestens 600 N/cm² nur für den Beginn der Hochdruckphase (Abschnitt H1) erforderlich ist, um den Pressgutstapel, aufweisend eine hoch- oder mitteldichte Faserplatte oder ein Trägerpapier mit einer Lage von Kunstharz, zu prägen. Deshalb kann der Pressdruck in einem zweiten Abschnitt H2 wie vorstehend beschrieben reduziert werden. Das Reduzieren des maximalen Pressdrucks auf den reduzierten Pressdruck erfolgt vorzugsweise nach maximal 50 % der Dauer, die insgesamt für die Hochdruckphase erforderlich ist. Der Pressgutstapel entwickelt keine Rückstellkräfte, die zu einer Nivellierung oder Verformung des auf die Lage des Kunstharzes übertragenen Strukturprofils führen. Eine erste Hochdruckphase H1 bei maximalem Druck sollte nach den Erkenntnissen der Erfinder so lang ausgelegt sein, dass das beim Pressen frei werdende Wasser so weit es im Kunstharz während des Aushärtens aufgenommen werden kann, fein verteilt in der Lage des Kunstharzes fixiert ist, z. B. durch die zunehmende Aushärtung der Kunstharz-Matrix. Auf diese Weise wird eine sehr gute Transparenz der Kunstharzschicht auf dem Laminat erzielt. Die Dauer der ersten Hochdruckphase H1 wird durch wenige Versuche empirisch ermittelt.

Nach einer zweiten Alternative des erfindungsgemäßen Verfahrens wird während des Pressens des Pressgut-Stapels durch eine Messvorrichtung der Abstand der Pressbleche der Presse erfasst. Bei Unterschreiten eines in Abhängigkeit von der jeweiligen Holzwerkstoffplatte und der jeweiligen Beschichtung einstellbaren Grenzwertes wird vom maximalen Druck auf den reduzierten Druck abgesenkt. Bei dieser Ausführung des erfindungsgemäßen Verfahrens wird darauf abgestellt, dass der hohe maximale Druck von mindestens 600 N/cm² die Holzwerkstoffplatte, insbesondere ein Holzwerkstoffplatte mit einer Dichte von weniger als 500 kg/m³ stark komprimiert. Es ist aber nicht erwünscht, eine zu starke Komprimierung der Holzwerkstoffplatte zuzulassen. Das Einhalten eines Grenzwertes für den Abstand der Pressbleche gewährleistet eine gleichmäßige Plattenstärke am Ende des Pressens. Das Reduzieren vom maximalen Druck auf den reduzierten Druck bei Erreichen des Grenzwertes für den Abstand der Pressbleche gewährleistet, dass eine unerwünschte Komprimierung des Pressgut-Stapels vermieden wird. Diese zweite Alternative des erfindungsgemäßen Verfahrens kommt vor allem für Pressgut-Stapel zum Einsatz, die Substrate geringer Dichte, z. B. leichte Holzwerkstoffplatten enthalten.

Die Hochdruckphase H2, die für beide Alternativen des erfindungsgemäßen Verfahrens bei reduziertem Pressdruck durchgeführt wird, wird in der Regel durch schnelles Absenken des Drucks erzeugt, so dass in einem Diagramm des Druckverlaufs einer Pressung ein stufenartiger Verlauf von der Phase H1 zur Phase H2 dargestellt wird. Es ist aber in einer weiteren Ausführung des erfindungsgemäßen Verfahrens auch möglich, während der Phase H2 unterschiedliche reduzierte Drücke einzustellen. Bei dieser Ausführung wird nach mindestens 10 % der Dauer der Hochdruck-Phase H2 ein noch weiter reduzierter Druck oder ein erhöhter Druck eingestellt, der zwischen dem reduzierten Druck und dem maximalen Druck liegt. Die Hochdruck-Phase H2 beginnt mit dem Ende der Hochdruckphase H1, also dem Einstellen eines Drucks, der geringer ist als der maximale Druck und die Hochdruckphase H2 endet mit dem Beginn der Druckabbauphase O. Nachdem der reduzierte Druck für mindestens 10 % der Zeitdauer der Hochdruckphase H2 eingestellt wurde, wird nach dieser Ausführung der Erfindung während einer Hochdruck-Phase H3 ein weiter reduzierter oder ein erhöhter Druck eingestellt. Auch hier erfolgt das Einstellen eines noch weiter reduzierten oder eines erhöhten Drucks bevorzugt durch schnelles Einstellen des geänderten Drucks, so dass ein Diagramm des Druckverlaufs einen stufenartigen Verlauf zeigt. Das Einstellen unterschiedlicher Drücke während der Hochdruck-Phase H2 kann wiederholt durchgeführt werden.

Der Abschnitt erhöhten Drucks H3, der einsetzt, nachdem mindestens 10 % der Hochdruckphase H2 bei reduziertem Druck verstrichen sind, kann während der Phase H2 und gegen Ende der Phase H2 angeordnet sein. Der oder die Abschnitte erhöhten Drucks H3, die sich dadurch ergeben, ermöglichen das Austreten von überschüssigem Wasserdampf, der nicht oder nicht mehr in feinst verteilter Form in der Kunstharz-Schicht aufgenommen werden kann. Dies kann zum Beispiel der Fall sein, wenn die Holzwerkstoffplatte im Pressgut-Stapel oder das Trägerpapier im Pressgut-Stapel zu viel Wasser enthält. Auf diese Weise werden Dampfblasen verhindert, die dazu führen, dass sich die unterschiedlichen Bestandteile des Pressgut-Stapels nicht vollflächig miteinander verbinden.

Es hat sich zudem als Vorteil der Erfindung herausgestellt, dass neben der Reduzierung des insgesamt auf den Pressgutstapel aufzubringenden Drucks durch den nur initial im Abschnitt H1 aufgebrachten maximalen Druck und das anschließende weitere Pressen bei reduziertem Druck (Abschnitt H2) oder erhöhtem Druck (Abschnitt H3) in der Hochdruckphase ein weitaus geringerer Verschleiß an der Plattenpresse und ihren Bauteilen verursacht wird. Insbesondere die Pressenpolster, die den Pressgutstapel beim Beschichten und Prägen abdichtend an den Außenkanten umschließen, zeigen bei Einsatz des erfindungsgemäßen Verfahrens deutlich längere Standzeiten.

Mit dem erfindungsgemäßen Verfahren ist es nach einer alternativen Ausführung der Erfindung auch möglich, eine leichte Holzwerkstoffplatte mit einem Gewicht von maximal 500 kg/m³ zu prägen. Es hat sich herausgestellt, dass eine leichte Holzwerkstoffplatte einem initial aufgebrachten, maximalen Pressdruck von bis zu 350 N/cm² standhält, wenn nach maximal 50 % der Zeit, die für die Hochdruckphase erforderlich ist, ein reduzierter Pressdruck von maximal 200 N/cm² aufgebracht wird. Es kann also mit dieser Ausführung des erfindungsgemäßen Verfahrens ein leichte Holzwerkstoffplatte sowohl beschichtet als auch geprägt werden.

Das Einstellen oder Auswählen des für den jeweils zu beschichtenden und prägenden Pressgutstapel erforderlichen maximalen und reduzierten sowie ggf. erhöhten Pressdrucks sowie die notwendige Dauer für das Aufrechterhalten des maximalen Pressdrucks kann der Fachmann für alle Alternativen des erfindungsgemäßen Verfahrens in einfachen Versuchen optimieren. Der maximale, der reduzierte und ggf. der erhöhte Druck ergibt sich für den jeweiligen Anwendungsfall in Abhängigkeit vor allem von der Art des Substrats, also von der Art der Holzwerkstoffplatte, von der Dichte und der Stärke der Holzwerkstoffplatte, von der Art des Trägerpapiers, von der Art des Kunstharzes und der spezifischen Anordnung der Lage bzw. der Lagen von Kunstharz, dem zu prägenden Profil und der Temperatur der Pressbleche. Typisch sind während des Abschnitts H1 der Hochdruckphase maximale Pressdrücke für Trägerpapier bzw. Holzwerkstoffplatten mit einer Dichte von mehr als 500 kg/m³ von bis zu 700 N/cm², aber auch von 1.000 N/cm² oder mehr. Die Höhe des Drucks hängt lediglich von der Ausstattung und Auslegung der Plattenpresse ab. Das Aufbringen von sehr hohem Druck erfordert überproportional aufwändig Anlagen, ist aber technisch möglich. Für leichte Holzwerkstoffplatten mit einer Dichte von maximal 500 kg/m³ kann ein maximaler Pressdruck von bis zu 300 N/cm², bevorzugt von bis zu 250 N/cm² ausreichen.

Für ein Laminat, bei dem als Substrat Trägerpapier oder schwere Holzwerkstoffplatten mit einem Gewicht von mehr als 500 kg/m³ eingesetzt werden, kann der reduzierte Druck während des Abschnitts H2 der Hochdruckphase in einem weiten Bereich eingestellt werden. Typisch kann der reduzierte Druck maximal 350 N/cm² betragen, es kann aber auch sein, dass maximal 300 N/cm² oder maximal 250 N/cm² ausreichend sind. Für leichte Holzwerkstoffplatten kann der reduzierte Druck beispielsweise auf maximal 200 N/cm² eingestellt werden, er kann aber auch auf maximal 150 N/cm² bzw. auf maximal 100 N/cm² eingestellt werden.

Der erhöhte Druck, der während des Abschnitts H3 in der Hochdruckphase eingestellt werden kann, wenn ein Abschnitt H2 reduzierten Drucks vorausgegangen ist, wird auf Werte eingestellt, die zwischen dem vorstehend genannten reduzierten Druck und dem ebenfalls vorstehend beschriebenen, zugehörigen maximalen Druck liegen, der im Abschnitt H1 der Hochdruckphase erreicht wird.

Das erfindungsgemäße Verfahren wird bevorzugt durch Umsetzung einer eigenständigen erfinderischen Erkenntnis in der Weise ausgeführt, dass die Druckaufbauphase, in der der Druck durch das Schließen der Plattenpresse vom Umgebungsdruck bis zum Erreichen des maximalen Drucks gesteigert wird, maximal 3 Sekunden, bevorzugt maximal 2 Sekunden dauert. Bei bekannten Pressen wird die Zeit für das Schließen der Presse angegeben, die bis zum Erreichen eines Drucks von 120 N/cm² oder 150 N/cm² benötigt wird, als sogenannte drucklose Liegezeit angegeben. Sie beträgt bei heutigen Plattenpressen meist weniger als 1 Sekunde, z. B. 0,8 Sekunden. Bekannte Plattenpressen steigern den Druck dann ohne weitere Beschleunigung und benötigen demzufolge zum Erreichen des zum Prägen erforderlichen Drucks von mindestens 600 N/cm² ca. 5 Sekunden oder mehr.

Bereits während der Druckaufbauphase A wird das Kunstharz unter Einwirkung von Druck und Temperatur verflüssigt und das chemische Vernetzen, das Aushärten setzt ein. Muss nun, z. B. zum Prägen der Holzwerkstoffplattenoberfläche oder des HPL ein höherer Druck aufgebracht werden, so dauert die Druckaufbauphase nach dem Stand der Technik bisher deutlich länger als beim einfachen Beschichten. Entsprechend länger wirkt die Reaktionstemperatur mit nachteiligen Folgen auf das Kunstharz ein. Auf diese Weise verlängert sich der Pressvorgang und mindert so die Kapazität der Presse.

Es wurde erkannt, dass ein möglichst schnelles Schließen der Plattenpresse bis zum maximalen Pressdruck sich vorteilhaft auf das Aushärten des Kunstharzes auswirkt. Nach dem Vorschlag des Erfinders wird die Plattenpresse so ausgelegt, dass ausgehend vom Umgebungsdruck ein Erreichen des maximalen Drucks in maximal 3 Sekunden gewährleistet ist. Auf diese Weise kann eine Holzwerkstoffplatte oder ein HPL beschleunigt beschichtet und geprägt werden.

Der sich nach dem Erreichen des maximalen Drucks anschließende erste Abschnitt H1 der Hochdruckphase dauert in der Regel maximal 8 Sekunden, kann aber auch nach maximal 7 Sekunden oder nach maximal 6 Sekunden abgeschlossen sein. Im Einzelfall hängt dies von der Art und Stärke des Substrats und von der Art und der Anzahl der Lagen von Kunstharz ab. Werden z. B. mehrere mit Kunstharz getränkte Dekorpapiere und Overlays auf der Oberseite der Holzwerkstoffplatte sowie ein mit Kunstharz getränktes Papier als Gegenzug auf der Unterseite der Holzwerkstoffplatte eingesetzt, wird mehr Zeit zum Aushärten des Kunstharzes benötigt als wenn nur eine einzige Schicht flüssiges Kunstharz auf einer Seite einer Holzwerkstoffplatte oder eines HPL auszuhärten ist.

Zur Durchführung des erfindungsgemäßen Verfahrens werden bevorzugt Pressbleche eingesetzt, die ein Strukturprofil mit einer Profiltiefe von mindestens 30 µm, bevorzugt von bis zu 100 µm, vorteilhaft von bis zu 150 µm, besonders bevorzugt von bis zu 220 µm aufweisen. Erfindungsgemäß weist mindestens ein Pressblech ein Strukturprofil auf, bei Bedarf können aber auch beide Pressbleche mit gleichen oder unterschiedlichen Strukturprofilen ausgestattet sein.

Zur Durchführung des erfindungsgemäßen Verfahrens werden im Pressgut-Stapel als Lage von Kunstharz kunstharzgetränktes Papier, Kunstharz-Folie oder eine Beschichtung aus Kunstharz eingesetzt. Unter einer Beschichtung aus Kunstharz wird hier eine Lage flüssigen, meist zähflüssigen Kunstharzes auf der Oberfläche einer Holzwerkstoffplatte verstanden, dass noch nicht ausgehärtet ist. Das Auftragen des flüssigen, noch nicht aufgetragenen Kunstharzes vereinfacht die Handhabung des Pressgutstapels, weil Kunstharz und Holzwerkstoffplatte nicht gegeneinander verschieblich sind.

In dem erfindungsgemäßen Verfahren können Holzwerkstoffe unterschiedlicher Zusammensetzung, insbesondere hochdichte, mitteldichte oder leichte Holzfaserplatten, Spanplatten, Sperrholz oder Massivholz als Holzwerkstoffplatte im Pressgut-Stapel eingesetzt werden. Alternativ können Trägerpapiere zum Herstellen von HPL eingesetzt werden.

Details der Erfindung werden an Hand eines Ausführungsbeispiels näher erläutert. Es zeigt:
- Fig. 1: eine schematische Ablaufdarstellung des erfindungsgemäßen Verfahrens für eine Holzwerkstoffplatte mit einer Dichte von mehr als 500 kg/m³
- Fig. 2: eine schematische Ablaufdarstellung des erfindungsgemäßen Verfahrens gemäß einer alternativen Ausführungsform.

Ein Pressgutstapel, zusammengesetzt aus einer mitteldichten Faserplatte (MDF-Platte) mit einer Dichte von 700 kg/m³ ist auf der Unterseite mit einer Lage aus zähflüssigem Kunstharz, hier einem Melaminharz, versehen. Auf der Oberseite der MDF-Platte sind drei mit Kunstharz, ebenfalls mit Melaminharz getränkte, Papiere aufgelegt, ausgehend von der Oberseite der MDF-Platte zunächst ein mit einer Holzimitation (Eiche) bedrucktes Dekorpapier, dann ein mit Kunstharz getränktes Paper, in das zusätzlich Korund eingearbeitet ist und schließlich als außenliegender Abschluss ein weiteres mit Kunstharz getränktes Papier. Dieser Pressgutstapel wird auf dem unteren Pressblech der Plattenpresse abgelegt. Die Oberfläche des Pressgutstapels wird durch die auf 160 °C bis 175 °C aufgeheizten Pressbleche nach dem Schließen der Plattenpresse erhitzt.

Das untere Pressblech ist glatt, das obere Pressblech ist mit einem Strukturprofil versehen, das Eichenholz imitiert und das Holzporen mit einer Tiefe von bis zu 120 µm nachahmt. Die Profiltiefe des Strukturprofils variiert, weil auch weniger Tiefe Poren Bestandteil des Strukturprofils sind. Maximal beträgt die Profiltiefe also 120 µm. Sie könnte für andere Holzarten oder für das Nachahmen von Steinprofilen auch bis 220 µm oder mehr betragen. Um jedoch zu vermeiden, dass Vertiefungen in der Oberfläche der beschichteten Holzwerkstoffplatte entstehen, die u. U. schlecht zu reinigen sind, aber auch weil größere Profiltiefen weiter erhöhten maximalen Druck erfordern, weisen die meisten Strukturprofile eine Profiltiefe von bis zu 220 µm auf.

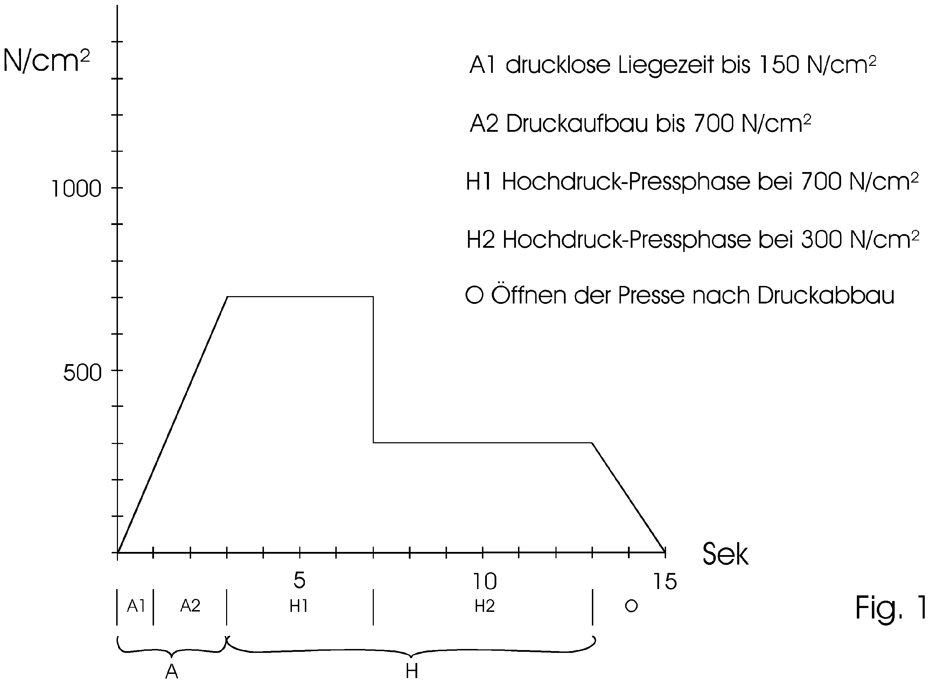

Unmittelbar nach dem Positionieren des Pressgutstapels schließt sich die Presse und die Druckaufbauphase A beginnt. Wie in Fig. 1 dargestellt, ist ein Druck von 150 N/cm² nach 1,0 Sekunden erreicht. Die im Stand der Technik bekannte drucklose Liegezeit beträgt also 1,0 Sekunden. Dieser Abschnitt ist in Fig. 1 mit A1 bezeichnet. Die Druckaufbauphase setzt sich fort bis der maximale Druck von 700 N/ cm² nach 3 Sekunden erreicht ist. Dieser Abschnitt ist in Fig. 1 mit A2 bezeichnet. Während der zweite Abschnitt A2 der Druckaufbauphase A prägt sich das Strukturprofil des oberen Pressblechs in die Kunstharzschicht ein, die bei zunehmender Erwärmung verflüssigt. Nach bzw. mit dem Verflüssigen setzt das Aushärten des Kunstharzes ein, indem Vernetzungsreaktionen beginnen.

An die Druckaufbauphase A schließt sich die Hochdruckphase H an. Die Hochdruckphase H unterteilt sich in zwei Abschnitte H1 und H2. Die Hochdruckphase dauert insgesamt 10 Sekunden. Der erste Abschnitt H1 dauert 4 Sekunden, währenddessen wird der maximale Druck von 700 N/cm² aufrecht erhalten (siehe Fig. 1). An den ersten Abschnitt H1 schließt sich unmittelbar der zweite Abschnitt H2 an, bei dem die Plattenpresse mit reduziertem Druck betrieben wird. Mit Bezug auf Fig. 1 wird im zweiten Abschnitt H2 während der verbleibenden 6 Sekunden der Druck auf 300 N/cm² abgesenkt.

Nach 4 Sekunden bei maximalem Druck, entsprechend 40 % der Zeit der gesamten Hochdruckphase, hat die Oberfläche der Holzwerkstoffplatte bzw. die darauf aufliegende Lage von Kunstharz die dreidimensionale Oberflächenstruktur angenommen, die durch das Strukturprofil des oberen Pressblechs eingeprägt wurde. Gleichzeitig ist die Vernetzung des Kunstharzes fortgeschritten, aber noch nicht abgeschlossen. Um die Vernetzung bzw. Aushärtung des Kunstharzes abzuschließen, genügt es, weitere 6 Sekunden bei 300 N/cm² zu pressen und die Presstemperatur von 160 °C aufrecht zu erhalten. Damit dauert die gesamte Hochdruckphase H 10 Sekunden. Diese Dauer verteilt sich zu 40% auf den ersten Abschnitt H1 und zu 60% auf den zweiten Abschnitt H2.

Das Absenken des Drucks in der abschließenden Druckabbauphase O und das Öffnen der Plattenpresse dauern 2 Sekunden. Der Pressgutstapel, jetzt als laminierte Holzwerkstoffplatte, wird der Plattenpresse entnommen. Die Oberseite der Holzwerkstoffplatte zeigt in der nun auflaminierten Kunstharzbeschichtung eine dreidimensionale Oberflächenstruktur, die ein Eichendekor mit einer Porenstruktur von bis zu 120 µm Profiltiefe wiedergibt.

Zum Beschichten und Prägen der Holzwerkstoffplatte nach dem vorstehend beschriebenen Ausführungsbeispiel wird eine Kurztaktpresse eingesetzt. Die Presse weist ein unteres Pressblech und ein oberes Pressblech auf, die jeweils beheizbar sind. Die Pressbleche werden mittels Druckkolben aufeinander zu bewegt. Die Druckkolben werden aus einem Speicher mit Druck beaufschlagt; als Medium zur Druckerzeugung wird Hydrauliköl eingesetzt. Der Speicher ermöglicht eine Druckaufbauphase, die maximal 3 Sekunden bis zum Erreichen des maximalen Pressdrucks von hier 700 N/mm² andauert.

Nach einem weiteren Ausführungsbeispiel wird ein Pressgutstapel zusammengestellt aus einer leichten Holzfaserplatte mit einer Dichte von 450 kg/m³ und einer Plattenstärke von 16 mm, auf deren Oberseite eine Folie aus Kunstharz, hier einem Melaminharz, positioniert ist. Der Pressgutstapel wird auf einem unteren Pressblech einer Plattenpresse abgelegt. Das obere Pressblech ist profiliert und das Strukturprofil weist ein Phantasiedekor auf, dessen Profiltiefe 200 µm beträgt. Die Pressbleche werden für den Pressvorgang auf 170 °C aufgeheizt. Mit dem Schließen der Presse beginnt eine Druckaufbauphase A, mit der ein maximaler Druck von 300 N/cm² erreicht wird. Die gesamte Druckaufbauphase A einschließlich der drucklosen Liegezeit A1 und der Phase A2 bis zum Erreichen des maximalen Drucks dauert 2 Sekunden. An diese Druckaufbauphase A schließt sich die Hochdruckphase H an, die insgesamt 20 Sekunden dauert. Während der Hochdruckphase H wird in einem ersten Abschnitt H1 der maximale Druck für 4 Sekunden aufrechterhalten. In dieser Phase H1 wird das Strukturprofil des oberen Pressblechs in eine Lage von Kunstharz, die auf die leichte Faserplatte aufgetragen ist, eingeprägt. Die leichte Faserplatte erfährt hier eine Kompression um 0,3 mm, da diese Platte einem solchen Druck von 300 N/cm² nicht standhalten kann. Nach Ablauf der 4 Sekunden wird während des Abschnitts H2 der Hochdruckphase H, der 16 Sekunden andauert, ein reduzierter Druck von 150 N/cm² eingestellt. Dieser Druck genügt, um das Aushärten des Kunstharzes zu einer gleichmäßigen und transparenten Schicht, die eine Prägung aufweist, auf der Oberseite der leichten Holzwerkstoffplatte zu gewährleisten. Wird dieselbe Platte nach dem Stand der Technik beschichtet und geprägt, ist sie für 20 Sekunden dem Druck von 300 N/cm² ausgesetzt und wird um 0,5 mm bis 0,8 mm komprimiert. Die nach dem Stand der Technik beschichteten und geprägten Platten können nicht mehr als maßhaltig bezeichnet werden, während die nach dem erfindungsgemäß geprägten Verfahren wesentlich maßhaltiger sind.

Nach Abschluss der Hochdruckphase wird der Druck während der Druckabbauphase O auf Umgebungsdruck abgebaut, die Plattenpresse wird geöffnet und die beschichtete und geprägte Holzwerkstoffplatte, die aus dem Pressgutstapel hergestellt wurde, wird aus der Plattenpresse entfernt. Für diese alternative Ausführung des Verfahrens sind - soweit nicht reduzierte Drücke anzuwenden sind- sämtliche Hinweise zur Führung des Verfahrens anwendbar, die in dieser Anmeldung beschrieben sind.

Auf diese Weise wird erfindungsgemäß eine leichte Holzwerkstoffplatte bereitgestellt, die mit einer Oberflächenbeschichtung versehen ist und die -samt der Oberflächenbeschichtung- mit einer Prägung versehen ist.

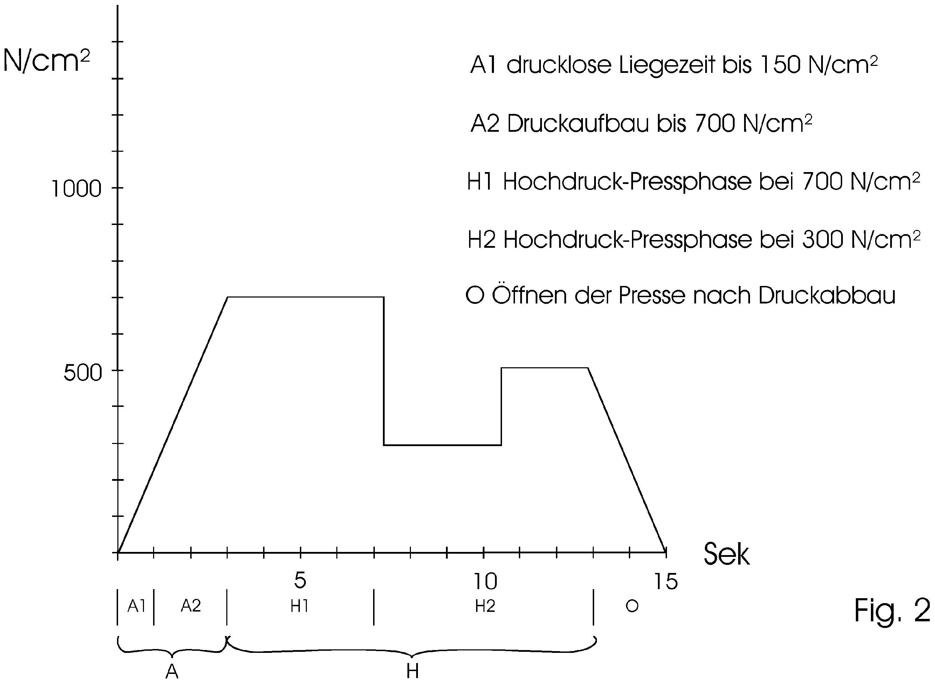

Fig. 2 zeigt eine Ausführung der Erfindung, bei der ein Pressgut-Stapel mit einem Trägerpapier, hier einem Kraftpapier mit einem Flächengewicht von 100 g/m², das durch ein Dekorpapier und zwei auf dem Dekorpapier angeordnete Overlays abgedeckt ist. Dekorpapier und Overlays weisen jeweils ein Flächengewicht von 40 g/m² auf und sind mit Melaminharz getränkt. Das Dekorpapier ist mit einem Holzdekor bedruckt, das Overlay weist kein Dekor auf, allerdings ist das Kunstharz des auf dem Dekorpapier angebrachten Overlays mit Korund versetzt, während das zuoberst liegende Overlay kein Korund im Kunstharz aufweist.

Zum Herstellen eines Laminats, das üblicherweise als HPL-Laminat (High Pressure Laminate) bezeichnet wird, wird der vorbeschriebene Pressgut-Stapel in eine Plattenpresse eingebracht. In der Druckaufbauphase A wird ein Pressdruck von bis zu 750 N/cm² aufgebracht. Die Hochdruck-Phase H1 beginnt also nach 2 Sekunden mit einem maximalen Pressdruck von 750 N/cm². Nach 4 Sekunden wird der Druck auf 400 N/cm² abgesenkt. Die Hochdruck-Phase H2 beginnt also mit einem reduzierten Druck von 400 N/cm². Nach 3 Sekunden wird der Druck auf 550 N/cm² angehoben. Eine Hochdruck-Phase H3 mit erhöhtem Druck beginnt also mit 550 N/cm². Die Hochdruckphase H3 dauert 3 Sekunden, dann beginnt der Druckabbau auf Umgebungsdruck, so dass die Presse öffnen kann und das HPL-Laminat der Presse entnommen werden kann.

## Patentansprüche

1. Verfahren zum Beschichten und Prägen der Oberfläche eines mit Kunstharz beschichteten Substrats aus Holzwerkstoff oder Trägerpapier mit den Schritten:
- Einbringen eines Pressgut-Stapels, aufweisend ein Trägersubstrat aus Holzwerkstoff oder Trägerpapier und mindestens eine Lage Kunstharz in eine Plattenpresse mit einem oberen und einem unteren Pressblech, die jeweils beheizt sind, wobei mindestens ein Pressblech mit einem Strukturprofil versehen ist,
- Schließen der Presse und Aufbauen des Drucks in einer Druckaufbauphase bis zu einem maximalen Pressdruck
- Pressen des Pressgut-Stapels in einer Hochdruckphase bei maximalem Druck,
- Abbauen des Drucks in einer Druckabbauphase und Öffnen der Presse sowie
- Entfernen des Pressgut-Stapels aus der Plattenpresse,
wobei während eines ersten Abschnitts der Hochdruckphase der maximale Pressdruck aufgebracht wird, und dass mindestens während eines zweiten Abschnitts der Hochdruckphase ein reduzierter Pressdruck aufgebracht wird, **dadurch gekennzeichnet, dass**
im Pressgut-Stapel als Lage von Kunstharz kunstharzgetränktes Papier, Kunstharz-Folie oder eine Beschichtung aus Kunstharz eingesetzt werden.

2. Verfahren nach Anspruch 1, **dadurch gekennzeichnet, dass** als Trägersubstrat aus Holzwerkstoff hochdichte, mitteldichte oder leichte Holzfaserplatten, Spanplatten, Sperrholz oder Massivholz im Pressgut-Stapel eingesetzt werden.

3. Verfahren nach Anspruch 1, **dadurch gekennzeichnet, dass** der maximale Pressdruck für Holzwerkstoffplatten mit einer Dichte von mehr als 500 kg/m³ als Trägersubstrat mindestens 600 N/cm² beträgt, und dass der maximale Pressdruck für Holzwerkstoffplatten mit einer Dichte von maximal 500 kg/m³ als Trägersubstrat bis zu 350 N/cm² beträgt.

4. Verfahren nach Anspruch 2 oder 3, **dadurch gekennzeichnet, dass** während eines ersten Abschnitts H1 der Hochdruckphase H der maximale Pressdruck aufgebracht wird, der, bezogen auf die Dauer der gesamten Hochdruckphase bis zu 50% dauert, und dass anschließend während eines zweiten Abschnitts H2 der Hochdruckphase H ein reduzierter Pressdruck von maximal 350 N/cm² für Holzwerkstoffplatten mit einer Dichte von mehr als 500 kg/m³ als Trägersubstrat und ein reduzierter Pressdruck von maximal 200 N/cm² für Holzwerkstoffplatten mit einer Dichte von maximal 500 kg/m³ als Trägersubstrat aufgebracht wird.

5. Verfahren nach Anspruch 1, **dadurch gekennzeichnet, dass** die Dauer des ersten Abschnitts H1 der Hochdruckphase bis zu 50%, insbesondere bis zu 40% der gesamten Hochdruckphase dauert, bevorzugt bis zu 30%, vorteilhaft bis zu 20 % der gesamten Hochdruckphase dauert.

6. Verfahren nach Anspruch 1 oder 3, **dadurch gekennzeichnet, dass** für Holzwerkstoffplatten mit einer Dichte von mehr als 500 kg/m³ als Trägersubstrat ein maximaler Pressdruck von mindestens 700 N/cm², bevorzugt von mindestens 1.000 N/cm² aufgebracht wird.

7. Verfahren nach Anspruch 1 oder 3, **dadurch gekennzeichnet, dass** für Holzwerkstoffplatten mit einer Dichte von maximal 500 kg/m³ als Trägersubstrat ein maximaler Pressdruck von bis zu 300 N/cm², bevorzugt von bis zu 250 N/cm² aufgebracht wird.

8. Verfahren nach Anspruch 1, 3 oder 4, **dadurch gekennzeichnet, dass** für Holzwerkstoffplatten mit einer Dichte von mehr als 500 kg/m³ als Trägersubstrat ein reduzierter Pressdruck von maximal 300 N/cm², bevorzugt von maximal 250 N/cm² aufgebracht wird.

9. Verfahren nach Anspruch 1, 3 oder 5, **dadurch gekennzeichnet, dass** für Holzwerkstoffplatten mit einer Dichte von maximal 500 kg/m³ als Trägersubstrat ein reduzierter Pressdruck von maximal 150 N/cm², bevorzugt von bis zu 100 N/cm² aufgebracht wird.

10. Verfahren nach einem der vorangehenden Ansprüche, **dadurch gekennzeichnet, dass** die Dauer der Druckaufbauphase maximal 3 Sekunden, bevorzugt maximal 2 Sekunden beträgt.

11. Verfahren nach einem der vorangehenden Ansprüche, **dadurch gekennzeichnet, dass** die Dauer des ersten Abschnitts H1 der Hochdruckphase maximal 8 Sekunden, bevorzugt maximal 7 Sekunden, vorteilhaft maximal 6 Sekunden beträgt.

12. Verfahren nach einem der vorangehenden Ansprüche, **dadurch gekennzeichnet, dass** ein Strukturprofil in mindestens einem Pressblech verwendet wird, das eine Profiltiefe von mindestens 30 µm, bevorzugt von bis zu 100 µm, vorteilhaft von bis zu 150 µm, besonders bevorzugt von bis zu 400 µm aufweist.

13. Verfahren nach einem der vorangehenden Ansprüche, **dadurch gekennzeichnet, dass** in der Hochdruckphase der Abstand der beiden Pressbleche erfasst wird, und dass bei Erreichen eines vorgegebenen Abstands der maximale Druck auf den reduzierten Druck abgesenkt wird.

## Claims

1. A method for coating and embossing the surface of a substrate that consists of a wood material or carrier paper and is coated with plastic resin, comprising the steps:
- introducing a stack of pressed material having a carrier substrate consisting of wood material or carrier paper and at least one layer of artificial resin into a plate press with a top and bottom press plate that are each heated, wherein at least one press plate is provided with a structured profile,
- closing the press and building up the pressure in a pressure buildup phase up to a maximum pressing power
- pressing the stack of pressed material in a high-pressure phase at maximum pressure,
- reducing the pressure in a pressure-reducing phase and opening the press, as well as
- removing the stack of pressed material from the plate press,
wherein a maximum pressing power is applied during a first section of the high-pressure phase, and a reduced pressing power is applied at least during one second section of the high-pressure phase,
**characterized in that**
artificial-resin-saturated paper, artificial resin film or a coating consisting of artificial resin is used as the layer of artificial resin in the stack of pressed material.

2. The method according to claim 1, **characterized in that** as carrier substrat consisting of wood material high-density, medium-density or light wood fiber board, chipboard, plywood or solid wood is used in the stack of pressed material.

3. The method according to claim 1, **characterized in that** the maximum pressing power for wood material panels with a density of more than 500 kg/m³ as the carrier substrate is at least 600 N/cm², and the maximum pressing power for wood material panels with a maximum density of 500 kg/m³ as the carrier substrate is up to 350 N/cm².

4. The method according to claim 2 or 3, **characterized in that** during a first section H1 of the high-pressure phase H, the maximum pressing power is applied which lasts up to 50% of the duration of the overall high-pressure phase, and subsequently during a second section H2 of the high-pressure phase H, a reduced pressing power of at most 350 N/cm² is applied to wood material panels with a density greater than 500 kg/m³ as the carrier substrate, and a reduced pressing power of at most 200 N/cm² is applied to wood material panels with a maximum density of 500 kg/m³ as the carrier substrate.

5. The method according to claim 1, **characterized in that** the duration of the first section H1 of the high-pressure phase lasts up to 50%, in particular up to 40% of the overall high-pressure phase, preferably up to 30%, advantageously up to 20% of the overall high-pressure phase.

6. The method according to claim 1 or 3, **characterized in that** a maximum pressing power of at least 700 N/cm², preferably at least 1,000 N/cm², is applied to wood material panels with a density greater than 500 kg/m³ as the carrier substrate.

7. The method according to claim 1 or 3, **characterized in that** a maximum pressing power of up to 300 N/cm², preferably up to 250 N/cm², is applied to wood material panels with a maximum density of 500 kg/m³ as the carrier substrate.

8. The method according to claim 1, 3 or 4, **characterized in that** a reduced pressing power of at most 300 N/cm², preferably at most 250 N/cm², is applied to wood material panels with a density greater than 500 kg/m³ as the carrier substrate.

9. The method according to claim 1, 3 or 5, **characterized in that** a reduced pressing power of at most 150 N/cm², preferably up to 100 N/cm², is applied to wood material panels with a maximum density of 500 kg/m³ as the carrier substrate.

10. The method according to one of the preceding claims, **characterized in that** the duration of the pressure buildup phase is at most 3 seconds, preferably at most 2 seconds.

11. The method according to one of the preceding claims, **characterized in that** the duration of the first section H1 of the high-pressure phase is at most 8 seconds, preferably at most 7 seconds, advantageously at most 6 seconds.

12. The method according to one of the preceding claims, **characterized in that** a structured profile is used in at least one pressure plate that has a profile depth of at least 30 µm, preferably up to 100 µm, advantageously up to 150 µm, and particularly preferably up to 400 µm.

13. The method according to one of the preceding claims, **characterized in that** in the high-pressure phase, the distance between the two pressure plates is detected and, upon reaching a given distance, the maximum pressure is lowered to the reduced pressure.

## Revendications

1. Procédé destiné au revêtement et à l'estampage de la surface supérieure d'un substrat à base de bois ou de papier support revêtu de résine synthétique, comprenant les étapes suivantes :
- apport d'une pile de produits à presser, présentant un substrat de support à base de bois ou de papier support et au moins une couche de résine synthétique, dans une presse à plateaux avec une tôle de pressage supérieure et une tôle de pressage inférieure, lesquelles sont respectivement chauffées, au moins une tôle de pressage étant pourvue d'un profil structuré,
- fermeture de la presse et accumulation de la pression dans une phase d'accumulation de pression jusqu'à une pression de pressage maximale,
- pressage de la pile de produits à presser dans une phase de haute pression à une pression maximale,
- diminution de la pression dans une phase de diminution de pression et ouverture de la presse, et
- retrait de la pile de produits à presser hors de la presse à plateaux,
dans lequel la pression de pressage maximale est appliquée pendant une première partie de la phase de haute pression, et dans lequel une pression de pressage réduite est appliquée au moins pendant une deuxième partie de la phase de haute pression,
**caractérisé en ce que**
- du papier imbibé de résine synthétique, une feuille de résine synthétique ou un revêtement en résine synthétique est utilisé en tant que couche de résine synthétique dans la pile de produits à presser.

2. Procédé selon la revendication 1,
**caractérisé en ce que** des panneaux de fibres de bois à densité élevée, à densité moyenne ou légers, des panneaux de particules, du contre-plaqué ou du bois massif sont utilisés dans la pile de produits à presser en tant que substrat de support à base de bois.

3. Procédé selon la revendication 1, **caractérisé en ce que** la pression de pressage maximale pour des panneaux à base de bois présentant une densité supérieure à 500 kg/m³ en tant que substrat de support s'élève à au moins 600 N/cm², et **en ce que** la pression de pressage maximale pour des panneaux à base de bois présentant une densité maximale de 500 kg/m³ en tant que substrat de support s'élève jusqu'à 350 N/cm².

4. Procédé selon la revendication 2 ou 3, **caractérisé en ce que** pendant une première partie H1 de la phase de haute pression H, la pression de pressage maximale est appliquée, laquelle dure jusqu'à 50% de la durée totale de la phase de haute pression, et **en ce que** par la suite, pendant une deuxième partie H2 de la phase de haute pression H, une pression de pressage réduite de 350 N/cm² maximum est appliquée pour des panneaux à base de bois présentant une densité supérieure à 500 kg/m³ en tant que substrat de support, et une pression de pressage réduite de 200 N/cm² maximum est appliquée pour des panneaux à base de bois présentant une densité maximale de 500 kg/m³ en tant que substrat de support.

5. Procédé selon la revendication 1, **caractérisé en ce que** la durée de la première partie H1 de la phase de haute pression dure jusqu'à 50%, en particulier jusqu'à 40% de la phase de haute pression totale, de préférence jusqu'à 30%, avantageusement jusqu'à 20% de la phase de haute pression totale.

6. Procédé selon la revendication 1 ou 3, **caractérisé en ce que** pour des panneaux à base de bois présentant une densité supérieure à 500 kg/m³ en tant que substrat de support, une pression de pressage maximale d'au moins 700 N/cm², de préférence d'au moins 1000 N/cm² est appliquée.

7. Procédé selon la revendication 1 ou 3, **caractérisé en ce que** pour des panneaux à base de bois présentant une densité maximale de 500 kg/m³ en tant que substrat de support, une pression de pressage maximale allant jusqu'à 300 N/cm², de préférence jusqu'à 250 N/cm² est appliquée.

8. Procédé selon la revendication 1, 3 ou 4, **caractérisé en ce que** pour des panneaux à base de bois présentant une densité supérieure à 500 kg/m³ en tant que substrat de support, une pression de pressage réduite de 300 N/cm² maximum, de préférence de 250 N/cm² maximum est appliquée.

9. Procédé selon la revendication 1, 3 ou 5, **caractérisé en ce que** pour des panneaux à base de bois présentant une densité maximale de 500 kg/m³ en tant que substrat de support, une pression de pressage réduite de 150 N/cm² maximum, allant de préférence jusqu'à 100 N/cm² est appliquée.

10. Procédé selon l'une des revendications précédentes, **caractérisé en ce que** la durée de la phase d'accumulation de pression s'élève à 3 secondes maximum, de préférence à 2 secondes maximum.

11. Procédé selon l'une des revendications précédentes **caractérisé en ce que** la durée de la première partie H1 de la phase de haute pression s'élève à 8 secondes maximum, de préférence à 7 secondes maximum, avantageusement à 6 secondes maximum.

12. Procédé selon l'une des revendications précédentes, **caractérisé en ce qu'**un profil structuré est utilisé dans au moins une tôle de pressage, lequel présente une profondeur de profil d'au moins 30 µm, allant de préférence jusqu'à 100 µm, avantageusement jusqu'à 150 µm, de façon particulièrement préférentielle jusqu'à 400 µm.

13. Procédé selon l'une des revendications précédentes, **caractérisé en ce que** dans la phase de haute pression, l'écart entre les deux tôles de pressage est détecté, et en que lors de l'atteinte d'un écart prédéfini, la pression maximale est abaissée à la pression réduite.
